# EUROPEAN PATENT SPECIFICATION

(11) **EP 2 114 959 B1**
(45) Date of publication and mention of the grant of the patent: **22.09.2010**
(21) Application number: 08708568.4
(22) Date of filing: 01.02.2008
(51) Int. Cl.: C07F 1/00, C10M 105/80

(54) **ORGANIC MOLYBDENUM COMPOUNDS AND LUBRICATING COMPOSITIONS WHICH CONTAIN SAID COMPOUNDS**
ORGANISCHE MOLYBDÄNVERBINDUNGEN UND DIESE VERBINDUNGEN ENTHALTENDE SCHMIERZUSAMMENSETZUNGEN
COMPOSÉS DE MOLYBDÈNE ORGANIQUE ET COMPOSITIONS LUBRIFIANTES CONTENANT LESDITS COMPOSÉS

(30) Priority: 01.02.2007 JP 2007023499
(43) Date of publication of application: 11.11.2009
(73) Proprietor: Shell Internationale Research Maatschappij B.V., 2596 HR The Hague (NL)
(72) Inventor: NAGATOMI, Eiji, Tokyo 135-8074 (JP); SHINODA, Noriaki, Tokyo 135-8074 (JP); AIHARA, Yoshihiko, Tokyo 135-8074 (JP)
(74) Representative: Matthezing, Robert Maarten
(86) International application number: PCT/EP2008/051260
(87) International publication number: WO 2008/092947

(56) References cited:
- DATABASE CA [Online] CHEMICAL ABSTRACTS SERVICE, COLUMBUS, OHIO, US; DOMRACHEV, G. A. ET AL: "Molybdenum disulfide formation during decomposition of organic compounds containing a molybdenum-sulfur bond" XP002473508 retrieved from STN Database accession no. 112:131070 & ZHURNAL OBSHCHEI KHIMII , 59(6), 1351-5 CODEN: ZOKHA4; ISSN: 0044-460X, 1989,
- DATABASE CA [Online] CHEMICAL ABSTRACTS SERVICE, COLUMBUS, OHIO, US; MAEJIMA, SEIJU ET AL: "Surface reinforcement of an inorganic porous material" XP002473509 retrieved from STN Database accession no. 107:186000 & JP 62 161992 A (FUJIKURA LTD., JAPAN) 17 July 1987 (1987-07-17)

## Description

The invention relates to novel organic molybdenum compounds, the use thereof as friction-modifiers and lubricating compositions which contain said compounds.

Friction-modifiers (friction-adjusting agents) are used for adjusting the friction characteristics of a lubricant to an appropriate level. Friction-modifiers which reduce friction are used in lubricating compositions such as gear oils and engine oils with a view to reducing fuel costs. Friction-modifiers which raise friction are used for maintaining a certain high friction level in the lubricating compositions which are used in the wet-type clutch part of an automatic gear box. Many types of such friction-modifiers have been proposed.

The organic molybdenum compounds are the most typical of these friction-modifiers and, as shown in "Shinban Sekiyu Seihin Tenkasai" (New Edition, Additives for Petroleum Products), by Toshio SAKURAI, Saiwai Shobo Co., published 25th July 1986, these organic molybdenum compounds are compounds which have two molybdenum atoms in one molecule as shown in formulae (2) and (3) below. 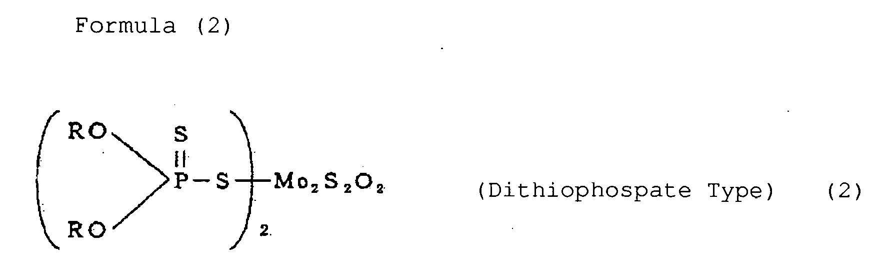 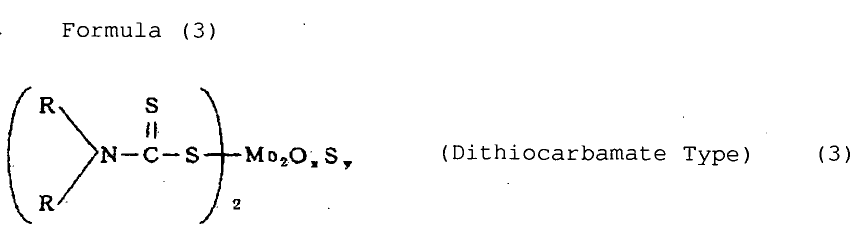 (Those compounds for which in this formulae x = 0 and y = 4, and for which x + y = 4, and for which x ≥ 2 are insoluble in oil and the others are oil-soluble.)

Furthermore, compounds in which the element molybdenum is included twice in one molecule have been disclosed in Japanese Patent No. 3495764, Japanese Examined Patent Publication 45-24562, Japanese Unexamined Patent Application Laid Open 52-19629, Japanese Unexamined Patent Application Laid Open 52-106824, Japanese Unexamined Patent Application Laid Open 48-56202, and Chemical Abstracts 112: 131070.

There is concern that the compounds where phosphorus and sulphur are included in the molecule such as those represented by the aforementioned general formulae (2) and (3) will cause metal corrosion because of their high activity.

It is an object the present invention to provide novel compounds which are useful as lubricating additives which are phosphorus and sulphur free and which raise the friction coefficient and control the friction of a wet-type clutch, for example, optimally, and friction modifiers comprising said compounds.

A further object of the invention is to provide lubricating compositions which contain these compounds.

To this end, the present invention provides cyclopentadienyl molybdenum hexa-carbonyl complexes which can be represented by general formula (1) which is indicated below. 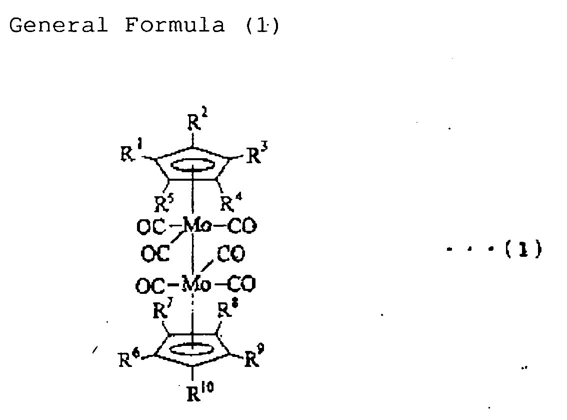 In this formula R¹ to R¹⁰ each individually represent a group selected from the group comprising hydrogen, a methyl group and an ethyl group.

Preferably R¹ to R¹⁰ are all the same.
Further the present invention provides the use of cyclopentadienyl molybdenum hexa-carbonyl complexes as friction-modifiers.

Also, the present invention provides lubricating compositions which contain the compounds.

The compounds of this invention can be produced by means of the reaction indicated below.

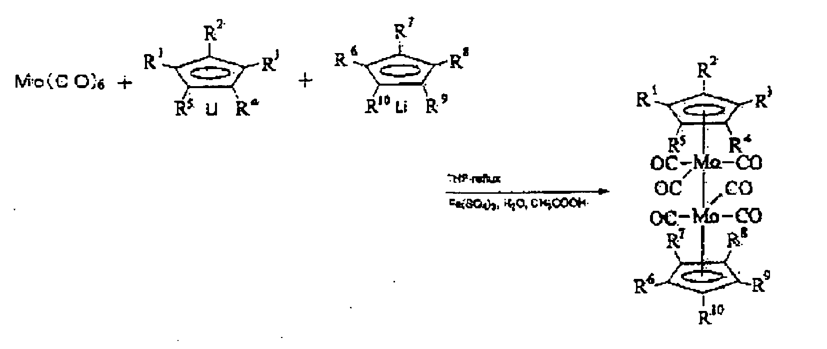

In this equation R¹ to R¹⁰ have the same significance as before.

Actual examples of the compounds of this invention are indicated below.

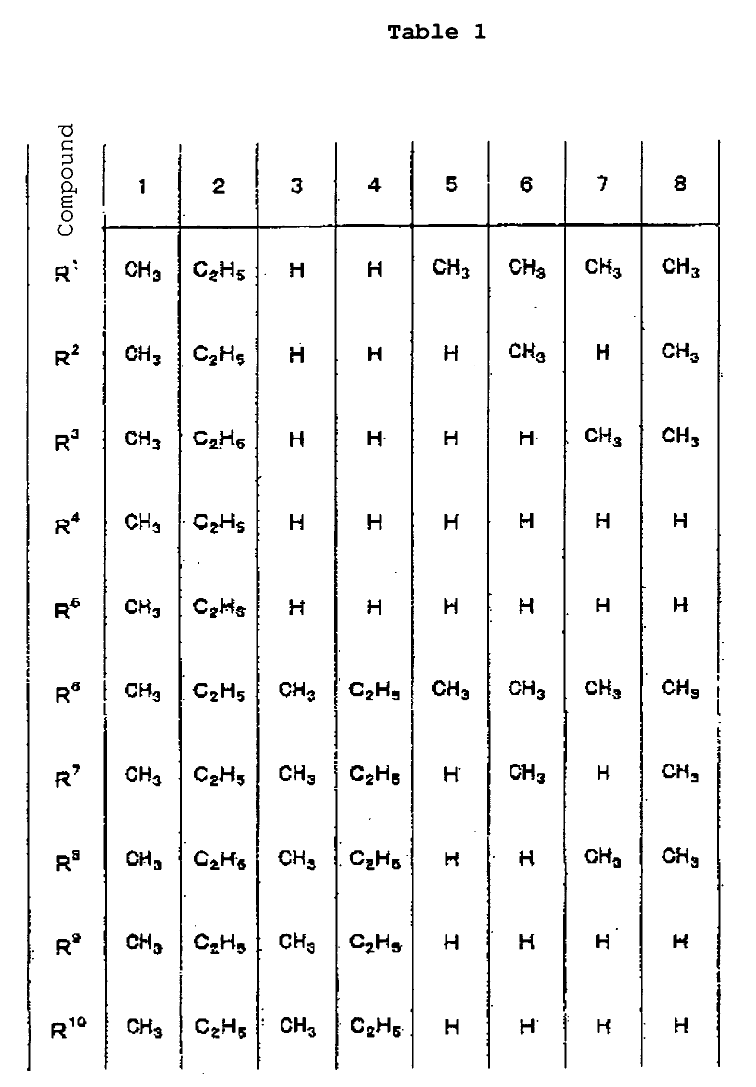

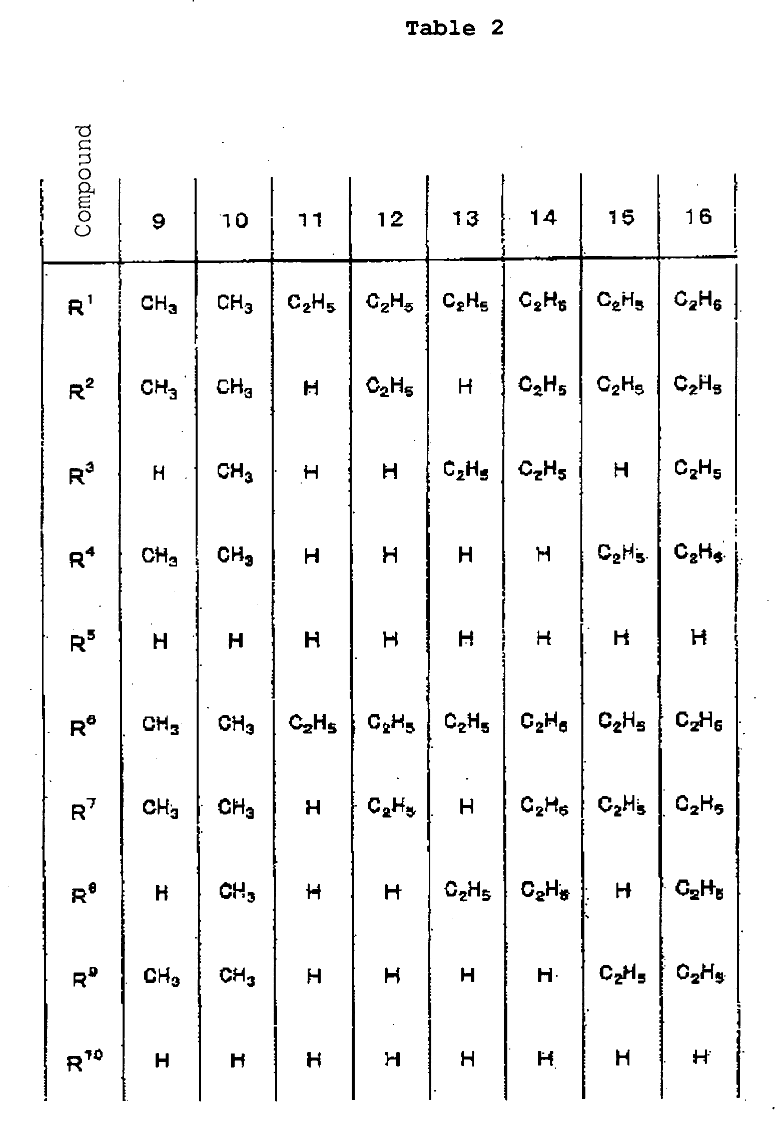

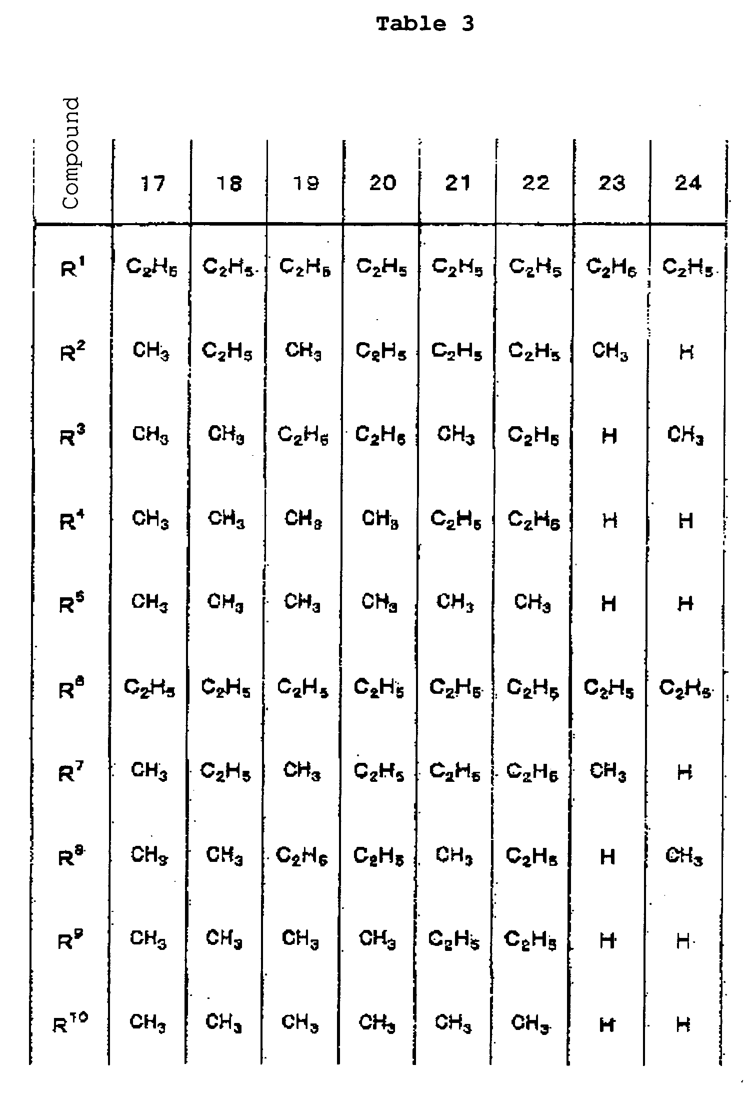

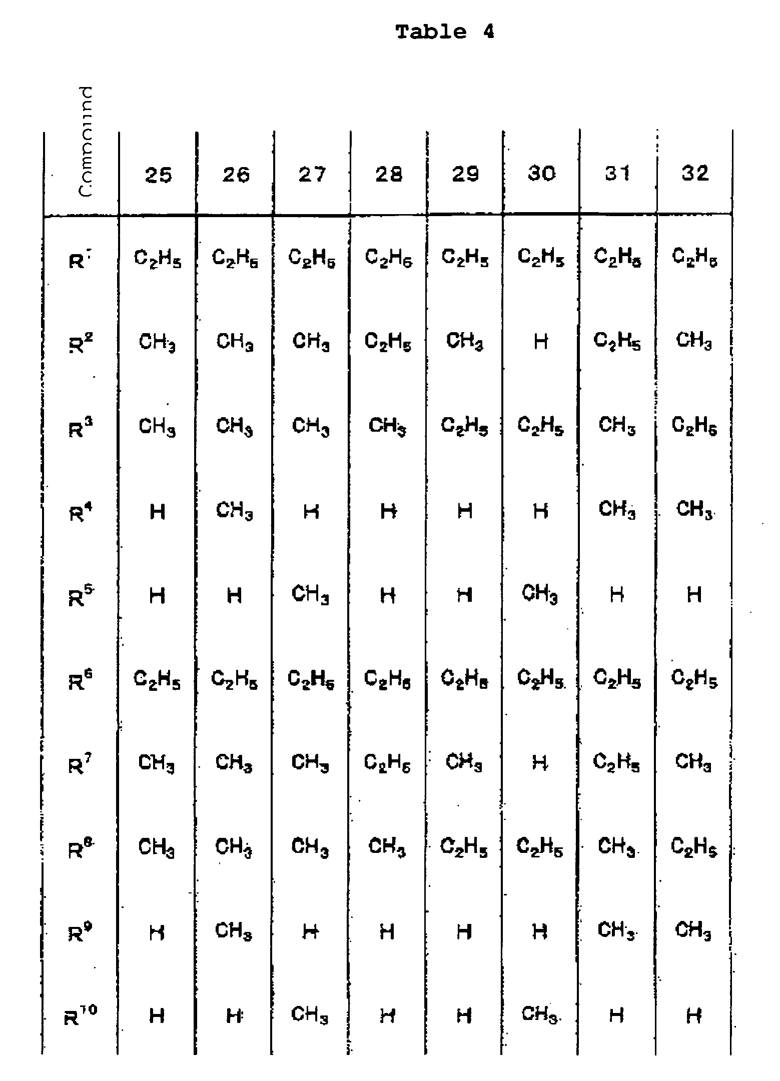

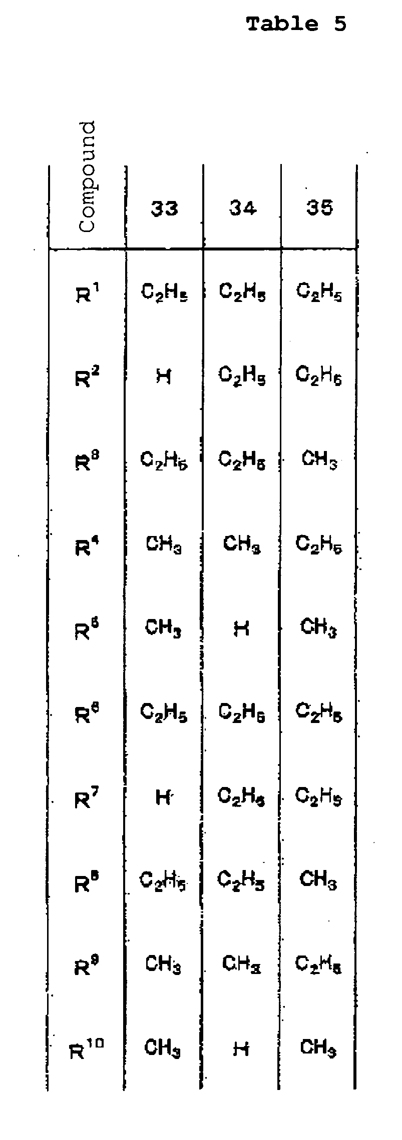

Lubricating oils and greases, for example, can be cited as lubricating compositions of this invention. The amount of a compound of this invention in a lubricating composition is the same as with the conventional friction-modifiers, for example, being compounded in a proportion with respect to the composition generally of some 0.1 to 10 wt%.

There are no particular limitations regarding the base oil or grease used in lubricating composition according to the present invention, and various conventional greases, mineral oils and synthetic oils may be conveniently used. For the puprose of this description, the term "base oil" is meant to also include a grease base stock.

The base oil used in the present invention may conveniently comprise mixtures of one or more mineral oils and/or one or more synthetic oils.

Mineral oils include liquid petroleum oils and solvent-treated or acid-treated mineral lubricating oil of the paraffinic, naphthenic, or mixed paraffinic/naphthenic type which may be further refined by hydrofinishing processes and/or dewaxing.

Suitable base oils for use in the lubricating oil composition of the present invention are Group I, Group II or Group III base oils, polyalphaolefins, Fischer-Tropsch derived base oils and mixtures thereof.

By "Group I" base oil, "Group II" base oil and "Group III" base oil in the present invention are meant lubricating oil base oils according to the definitions of American Petroleum Institute (API) categories I, II and III. Such API categories are defined in API Publication 1509, 15th Edition, Appendix E, April 2002.

Suitable Fischer-Tropsch derived base oils that may be conveniently used as the base oil in the lubricating oil composition of the present invention are those as for example disclosed in EP 0 776 959, EP 0 668 342, WO 97/21788, WO 00/15736, WO 00/14188, WO 00/14187, WO 00/14183, WO 00/14179, WO 00/08115, WO 99/41332, EP 1 029 029, WO 01/18156 and WO 01/57166.

Synthetic oils include hydrocarbon oils such as olefin oligomers (PAOs), dibasic acid esters, polyol esters, and dewaxed waxy raffinate. Synthetic hydrocarbon base oils sold by the Shell Group under the designation "XHVI" (trade mark) may be conveniently used.

### Effects of the Invention

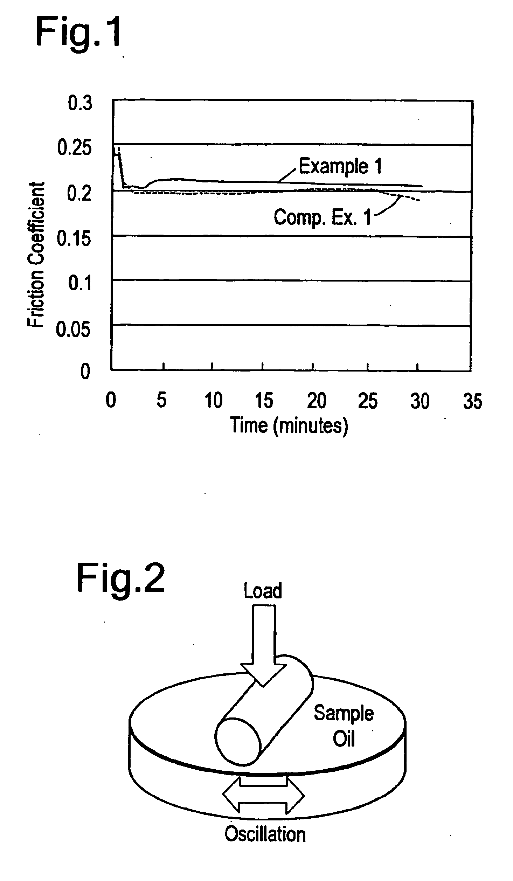

(1) Novel phosphorus and sulphur free Mo-based friction-modifiers have been obtained.
(2) The compounds of this invention raise the friction coefficient and they are suitable for use in automatic gear boxes as friction-modifiers which control the friction in a wet-type clutch, for example, to the optimum state. See Figure 1.
(3) The compounds of this invention are phosphorus and sulphur free and they can provide additives with which there is no concern in respect of their causing corrosion of metal parts.

### Examples

The invention is described below by means of an Example and a Comparative Example but the invention is not limited in any way by these examples.

### Example 1 (Comparative Example 1)

The synthesis of pentamethylcyclopendadienyl molybdenum hexa-carbonyl complex

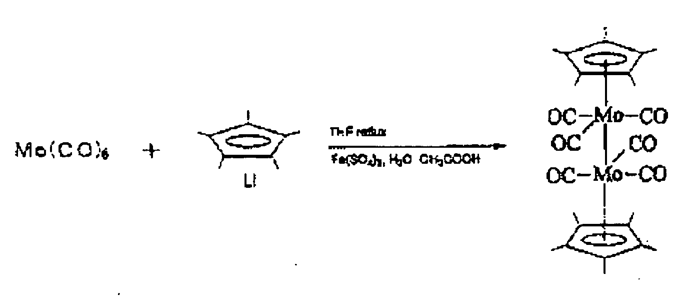

Tetrahydrofuran (THF, 45 ml) was added to 3.75 g (18.8 mmol) of pentamethylcyclopentadiene and, after being cooled to -78°C, 12.5 ml (18.8 mmol) of Bu-Li were added dropwise and lithium pentamethylcyclopentadienyl was co-ordinated. Then 5 g (18.8 mmol) of molybdenum hexa-carbonyl were added to this material and heated under reflux for 48 hours and, after the reaction had been completed, the mother liquor was cooled to 0°C. Separately, 3.2 g (18.8 mmol) of iron(II) sulphate was added to a solution comprising a mixture of 100 ml of pure water and 20 ml of acetic acid and the solution so obtained was added dropwise to the mother liquor. The red coloured solution obtained was subjected to suction filtration, washed and dried and the di(pentamethylcyglopentadienyl)molybdenum hexa-carbonyl complex was obtained by recrystallization. Yield 24%

The di(pentamethylcyclohexadienyl) molybdenum hexa-carbonyl complex obtained in this way was prepared in such a way as to provide an Mo content of 500 ppm in engine oil (di-isononyl adipic acid) (viscosity at 100°C: 3.04 mm²/s) to which 5% of a dispersing agent (alkenylsuccinic acid polyalkylene polyimide, trade name Infineum C9266) had been added.

Moreover, the case where the di(pentamethylcyclohexadienyl) molybdenum hexa-carbonyl complex had not been used in the aforementioned case was taken as Comparative Example 1. The two compositions are shown in Table 7 below.

These sample oils were subjected to 30 minute friction coefficient measurement and evaluation under the conditions shown in Table 6 below using an SRV tester (a reciprocating movement tester of the cylinder-on-disc type shown in Figure 2) and the results are shown in Figure 1. The test piece was 52100 steel.

### Testing Conditions

**Table 6**

| Condition | Parameter |
|---|---|
| Load | 400 N |
| Frequency | 50 Hz |
| Amplitude | 1.5 mm |
| Temperature | 100°C |
| Sample Size | 0.5 mm³ |

**Table 7**

| | Comparative Example 1 | Example 1 |
|---|---|---|
| Base Oil | Ester oil (diisononyl adipic acid) | Ester oil (diisononyl adipic acid) |
| Friction-modifier | Not added | Di(pentamethylcyclopentadienyl) molybdenum hexacarbonyl complex |
| Mo Content in the Oil ppm | 0 | 500 |
| Alkenylsuccinic acid polyalkylene polyimide wt% | 5 | 5 |

In the case of Example 1 a low friction coefficient when compared with the base oil with no addition (Comparative Example 1) was shown from 1 minute after the start of the test, as shown in Figure 1, and it is clear that the compound had the function of a friction-modifier. That is to say, the compounding of a friction-modifier of this invention (Example 1) clearly shows a higher friction coefficient when compared with the case where it has not been compounded (Comparative Example 1).
Figure 1 is a drawing which shows how the sample oils changed the friction coefficient with the passage of time.
Figure 2 is an outline drawing of the operation of the cylinder-on-disc reciprocating movement tester.

## Claims

1. A cyclopentadienyl molybdenum hexa-carbonyl complex having general formula (1) below 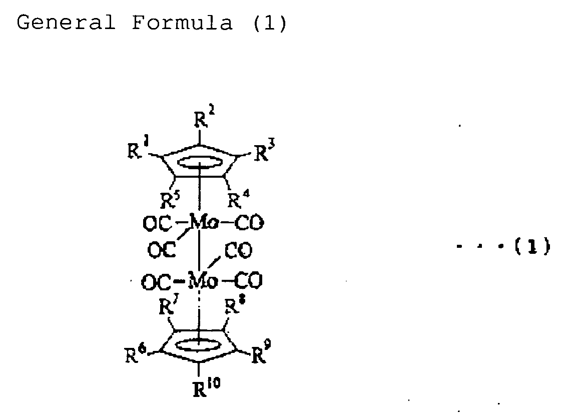 wherein R¹ to R¹⁰ each individually represent a group selected from among the group comprising hydrogen, a methyl group and an ethyl group.

2. The cyclopentadienyl molybdenum hexa-carbonyl complex according to Claim 1, wherein the aforementioned R¹ to R¹⁰ are all the same.

3. Use of the cyclopentadienyl molybdenum hexa-carbonyl complex according to Claim 1 or 2 as a friction-modifier.

4. A lubricating composition comprising a base oil and the cyclopentadienyl molybdenum hexa-carbonyl complex according to Claim 1 or 2.

5. Method of improving the friction characteristics of a lubricating composition by using the cyclopentadienyl molybdenum hexa-carbonyl complex according to Claim 1 or 2.

## Patentansprüche

1. Cyclopentadienyl-Molybdänhexacarbonyl-Komplex mit der nachstehenden allgemeinen Formel (1) 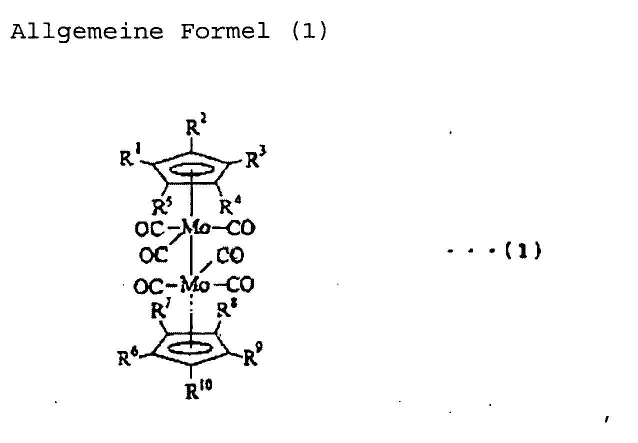 wobei R¹ bis R¹⁰ jeweils einzeln eine Gruppe darstellen, ausgewählt von der Gruppe, umfassend Wasserstoff, eine Methylgruppe und eine Ethylgruppe.

2. Cyclopentadienyl-Molybdänhexacarbonyl-Komplex nach Anspruch 1, wobei die vorgenannten R¹ bis R¹⁰alle gleich sind.

3. Verwendung des Cyclopentadienyl-Molybdänhexacarbonyl-Komplexes nach Anspruch 1 oder 2 als Reibkraftminderer.

4. Schmiermittelzusammensetzung, umfassend ein Grundöl und den Cyclopentadienyl-Molybdänhexcarbonyl-Komplex nach Anspruch 1 oder 2.

5. Verfahren zur Verbesserung der Reibungseigenschaften einer Schmiermittelzusammensetzung durch Verwenden des Cyclopentadienyl-Molybdänhexacarbonyl-Komplexes nach Anspruch 1 oder 2.

## Revendications

1. Complexe de cyclopentadiényle et de molybdène-hexacarbonyle répondant la formule générale (1) présentée ci-dessous : 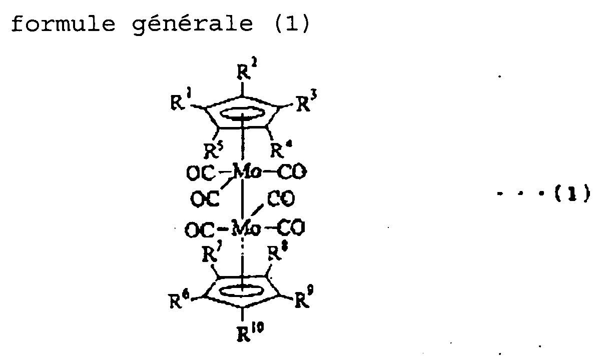 dans laquelle les radicaux R¹ à R¹⁰ représentent chacun individuellement un groupement sélectionné dans le groupe comprenant l'hydrogène, un groupement méthyle et un groupement éthyle.

2. Complexe de cyclopentadiényle et de molybdène-hexacarbonyle selon la revendication 1, dans lequel les radicaux R¹ à R¹⁰ mentionnés ci-dessus sont tous identiques.

3. Utilisation du complexe de cyclopentadiényle et de molybdène-hexacarbonyle selon la revendication 1 ou 2 comme modificateur de friction.

4. Composition lubrifiante comprenant une huile de base et le complexe de cyclopentadiényle et de molybdène-hexacarbonyle selon la revendication 1 ou 2.

5. Procédé pour améliorer les caractéristiques de friction d'une composition lubrifiante en utilisant le complexe de cyclopentadiényle et de molybdène-hexacarbonyle selon la revendication 1 ou 2.
